# EUROPEAN PATENT SPECIFICATION

(11) **EP 2 310 304 B1**
(45) Date of publication and mention of the grant of the patent: **17.10.2012**
(21) Application number: 09765928.8
(22) Date of filing: 19.06.2009
(51) Int. Cl.: B65G 37/00

(54) **A CONVEYING DEVICE**
FÖRDEREINRICHTUNG
DISPOSITIF DE TRANSPORT

(30) Priority: 20.06.2008 NL 2001708
(43) Date of publication of application: 20.04.2011
(73) Proprietor: Eurosort B.V., 1382 JX Weesp (NL)
(72) Inventor: BALK, Wouter, NL-1396 JK Baambrugge (NL)
(74) Representative: De Vries & Metman
(86) International application number: PCT/EP2009/057695
(87) International publication number: WO 2009/153349

(56) References cited:
- WO-A-03/042080
- DE-A1- 3 700 192
- GB-A- 1 330 627
- US-A- 5 271 139

## Description

The present invention relates to a conveying device for conveying products.

Conveying devices comprising a series of carriers including trays for supporting products which are thrown at a discharging station by opening the tray are known in the art. For example, such a conveying device is disclosed in WO 03/042080. In certain cases it may be desired to add, remove or re-arrange products on the trays.

The object of the invention is to provide a conveying device which fulfils the desire as defined above.

This is achieved by a conveying device, which is provided with a first conveyor and second conveyor, each comprising a series of carriers which are drivable in a conveying direction, each carrier including at least a tray for receiving at least a product thereon, which tray is movable between an open and closed position, wherein the first conveyor is provided with a discharging station and adapted such that the tray in closed position can be opened at the discharging station for discharging a product which is on the tray, and the second conveyor is provided with a loading station and adapted such that the tray is in the closed position for receiving a product thereon at the loading station, wherein the device is further provided with a drivable intermediate conveyor for conveying a product discharged at the discharging station to the second conveyor at the loading station, wherein the intermediate conveyor comprises a supporting surface for supporting the product, wherein the conveying device is adapted such that the supporting surface extends at a level below the tray at the discharging station when the corresponding carrier of the first conveyor is at the discharging station according to claim 1.

This provides the opportunity to add, remove or re-arrange products on the intermediate conveyor before the products are conveyed further by carriers of the second conveyor. As a consequence of the location of the first conveyor and intermediate conveyor at the discharging station the products fall on the supporting surface of the intermediate conveyor due to gravitation. Furthermore, the conveying device according to the invention provides a high degree of flexibility since products can be conveyed along a three-dimensional track; products may be added, removed or re-arranged by people standing on floor level, and the mentioned track may have different shapes, for example, by applying a U-shaped or L-shaped intermediate conveyor. It is noted that in practice a tray of a carrier of the first conveyor may already be opened before the corresponding carrier arrives at the discharging station in order to discharge a product at a different location. In that case the tray may pass the discharging station in open position or empty in closed position.

The device may be adapted such that the supporting surface extends at a level above the tray of the carrier of the second conveyor at the loading station when said carrier is at the loading station. This provides the opportunity to transfer the product from the intermediate conveyor to the second conveyor by gravitation.

The device may be adapted such that when the carrier of the second conveyor is at the loading station its tray is located higher than the level of the supporting surface of the intermediate conveyor at the discharging station, and the supporting surface of the intermediate conveyor comprises an inclined portion between the discharging station and loading station. The advantage of this embodiment is that the first and second conveyor can be built on substantially the same height, whereas the intermediate conveyor bridges the height difference to convey the products discharged from the first conveyor to the second conveyor.

Preferably, the intermediate conveyor includes a loading portion for adding, removing or re-arranging products on the supporting surface, which loading portion extends substantially horizontally as seen in its conveying direction, because this allows persons to handle products on the intermediate conveyors along the loading portion.

Alternatively, the intermediate conveyor includes a loading portion for adding, removing or re-arranging products on the supporting surface, which has a sufficient length to handle products, for example longer than 1 metre, independent from its orientation.

In a specific embodiment the conveying device may be adapted such that the first conveyor, the intermediate conveyor and the second conveyor have similar transport velocities. The intermediate conveyor may comprise an endless belt to achieve this situation, but alternative transport members are conceivable.

In an alternative embodiment the first conveyor and second conveyor are parts of a single endless main conveyor including the discharging station and the loading station, which main conveyor is adapted such that the tray of a carrier in closed position can be opened at the discharging station and closed before the loading station. In this case the intermediate conveyor forms a bypass of the main conveyor. If it is not desired to discharge a product at the discharging station a tray having a product thereon may remain in closed position when passing the discharging station and the loading station.

The tray may be tiltable with respect to the carrier, but alternative movable trays for discharging a product are possible. In practice the tiltable tray may be configured such that it automatically falls open when it is de-locked.

The carrier may comprise at least two tiltable trays which move in opposite directions when opened. In a closed position of the trays a supporting surface of the trays may form a substantially horizontal surface.

The carrier may comprise at least two trays next to each other as seen perpendicular to the conveying direction, which trays can be opened and closed independently. In case of two trays disposed parallel to each other, in other words a dual tray, two parallel product flows can be handled.

The first conveyor may be adapted such that each tray is opened at the discharging station. In practice this means that the products are not discharged before the corresponding carrier arrives at the discharging station. In this embodiment a control system for opening the trays may be rather simple since each tray is opened at the same location.

At least at the discharging station the first conveyor and the intermediate conveyor may have similar conveying directions, and/or at least at the loading station the second conveyor and the intermediate conveyor may have similar conveying directions, as seen from above. It is also possible that the conveying direction along the entire track that the product follows from first conveyor to second conveyor the conveying direction, as seen from above, is the same.

Preferably, the width of the supporting surface of the intermediate conveyor as seen perpendicular to the conveying direction is at least as wide as the width of the tray or trays as seen perpendicular to the conveying direction, because this provides sufficient space to add or re-arrange the products on the supporting surface. Depending on the product size, it is possible to handle parallel product flows, for example in case of dual trays in the first conveyor and second conveyor.

The intermediate conveyor may be curved within a plane extending parallel to the supporting surface. This means that the conveying direction of the supporting surface varies as seen from above. This provides a great flexibility of the configuration of the conveying device. The curve of the intermediate conveyor may be U-shaped or L-shaped, for example.

The second conveyor may be provided with a second discharging station, which is adapted such that it functions similar to the discharging station of the first conveyor, and the device may comprise a third conveyor including a second loading station, which is adapted such that it functions similar to the loading station of the second conveyor, and the device may comprise a second drivable intermediate conveyor for conveying a product discharged at the second discharging station to the third conveyor at the second loading station, wherein the second intermediate conveyor comprises a second supporting surface for supporting the product, wherein the conveying device is adapted such that the second supporting surface extends at a level below the tray at the second discharging station when the corresponding carrier of the second conveyor is at the second discharging station.

The invention will hereafter be elucidated with reference to the schematic drawings showing an embodiment of the invention by way of example.
Fig. 1 is a plan view of an embodiment of the conveying device according to the invention.
Fig. 2 is a similar view as Fig. 1, showing an alternative embodiment.
Fig. 3 is a portion of the embodiment of Fig. 2 on a larger scale.

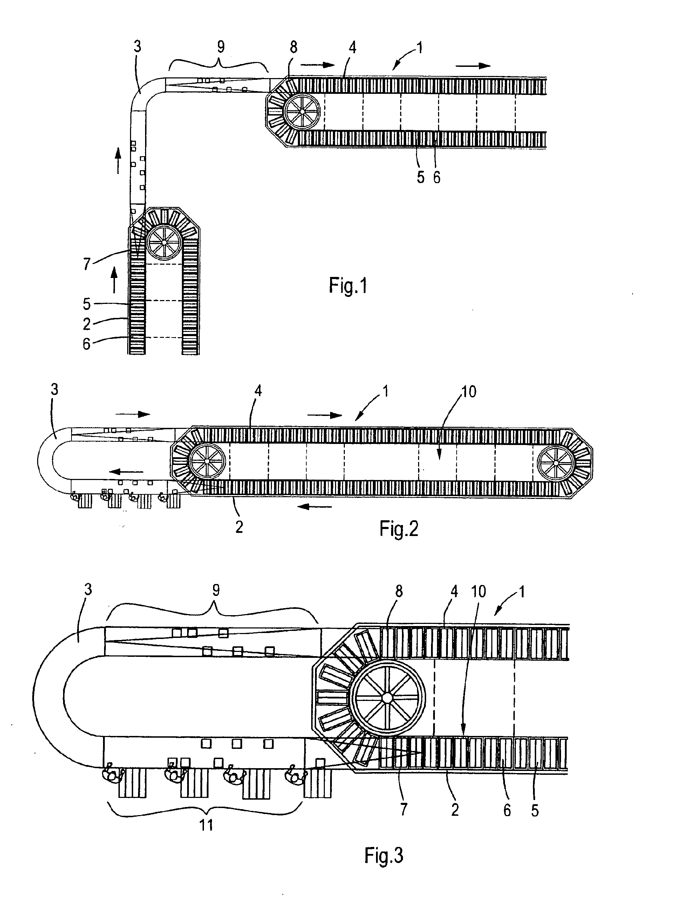

Fig. 1 shows an embodiment of a conveying device 1 according to the invention. The embodiment is provided with a first conveyor 2, an intermediate conveyor 3 and a second conveyor 4. The first conveyor 2 comprises a series of carriers 5 which are drivable in a conveying direction. In this case the carriers 5 are connected to a driving member, for example a chain (not shown). As a consequence the carriers 5 are connected to each other and move synchronously behind each other under operating conditions. The first conveyor 2 may be an endless conveyor.

Each of the carriers 5 include two tiltable trays 6. The trays 6 are tiltable about tilting axes extending parallel to each other and perpendicularly to the conveying direction. In this case the trays 5 of each carrier 5 open in opposite directions. In a closed position of the trays 6 the trays form a substantially horizontal carrying surface on which a product can be received and supported. Many alternatives of the configuration of the carriers 5 and trays 6 are conceivable. The carriers 5 may be provided with wheels running on a support or rail or the like, but alternative configurations are conceivable.

The first conveyor 2 is provided with a discharging station 7, at which a product that is on the tray 6 in a closed position thereof, is discharged. This is achieved by an actuator (not shown) which opens the trays 6 at the discharging station 7. Due to gravitation the product falls down at the discharging station 7. After discharging a product the trays 6 may be closed by a resetting device (not shown). In practice, it is not necessary that all of the trays 6 are opened at the discharging station 7. It is possible that an empty tray 6 in closed position is not opened at the discharging station 7, or that a carrier 5 including a tray 6 in open position just passes the discharging station 7.

The intermediate conveyor 3 is drivable and comprises a supporting surface for supporting a product, which supporting surface extends to the discharging station 7. More specifically, the supporting surface is located such that the product falls on the supporting surface of the intermediate conveyor 3 at the discharging station 7. This means that the level of the supporting surface at the discharging station 7 is below the trays 6 of the first conveyor 2 when a corresponding carrier 5 is at the discharging station 7. The intermediate conveyor 3 may comprise an endless belt, possibly comprising slats. This provides a great flexibility to the configuration of the conveying device 1, since the intermediate conveyor 3 may be bended in different direction, as seen from above, relatively simple.

In the embodiment as shown in Fig. 1 the second conveyor 4 is almost identical to the first conveyor 2. The second conveyor 4 also comprises a similar series of carriers 5 including tiltable trays 6 which carriers 5 are also drivable in a conveying direction. However, the second conveyor 4 is provided with a loading station 8. At the loading station 8 the trays 6 of the passing carriers 5 of the second conveyor 4 are in a closed position for receiving a product thereon.

The conveying device 1 is configured such that the supporting surface of the intermediate conveyor 3 extends at a level above the tray 6 of the carrier 5 of the second conveyor 4 at the loading station 8 when the carrier 5 is at the loading station 8. In other words, when a product is transported from the intermediate conveyor 3 to the second conveyor 4 the product falls on the trays 6 of the carrier 5 which is at the loading station 8 at that moment. Alternative transfer means for transporting a product from the intermediate conveyor 3 to the second conveyor 4 are conceivable.

In the embodiment as shown in Fig. 1 the supporting surface of the intermediate conveyor 3 comprises an inclined portion 9 between the discharging station 7 and the loading station 8, because when a carrier 5 of the second conveyor 4 is at the loading station 8 its trays 6 are located at a higher level than the level of the supporting surface of the intermediate conveyor 3 at the discharging station 7. This situation may happen when the trays 6 of the carriers 5 at the discharging station 7 are at the same level as the trays 6 at the loading station 8.

A first part of the intermediate conveyor 3 is aligned with a part of the first conveyor 2 extending upstream of the discharging station 7, whereas the intermediate conveyor 3 is also aligned with a part of the second conveyor 4 extending downstream of the loading station 8. The intermediate conveyor 3 comprises a bend of 90 degrees, but it may be clear that different angles are also possible.

The conveying direction of the conveying device is illustrated by arrows in Fig. 1. It can be seen that in this case the conveying direction along a track through the conveying device 1 changes, as seen from above.

Fig. 2 shows an alternative embodiment of the conveying device 1 and Fig. 3 shows a part of this embodiment on enlarged scale. In this case the first conveyor 2 and second conveyor 4 are parts of a single endless main conveyor 10. The main conveyor 10 comprises the discharging station 7 and the loading station 8. In fact, the intermediate conveyor 3 forms a bypass of the first conveyor 2 and second conveyor 4 of the main conveyor 10. Due to the alignment of the intermediate conveyor 3 with the first and second conveyor 2, 4 at the discharging station 7 and the loading station 8, respectively, efficient use of space is provided. The functioning of the main conveyor 10 is similar to the first conveyor 2 and the second conveyor 4 in the embodiment as shown in Fig. 1 and described hereinbefore. The trays 6 of the carriers 5 are opened at the discharging station 7 and closed between the discharging station 7 and the loading station 8. The closing of the trays 6 is performed by a resetting device (not shown).

The intermediate conveyor 3 is provided with the inclined portion 9. It also comprises a loading portion 11 for adding, removing or re-arranging products on the supporting surface. The loading portion extends substantially horizontally in the conveying direction to enable persons to handle products on the intermediate conveyor 3.

It is noted that the discharging station 7 is located before a bend in the first conveyor 2, but it is also possible to locate it at another location as long as the intermediate conveyor 3 extends such that a product falling from the trays 6 at the discharging station 7 is received on the supporting surface of the intermediate conveyor 3. Similarly, the loading station 8 may have a different location than shown in the embodiments of Fig. 1 and 3.

The embodiments as shown in Fig. 1-3 may be extended. The second conveyor 4 may be provided with a second discharging station (not shown) comparable to the discharging station 7 of the first conveyor 2. Furthermore, a third conveyor (not shown) including a second loading station, which is comparable to the loading station 8 of the second conveyor 8, and a second drivable intermediate conveyor for conveying a product discharged at the second discharging station to the third conveyor at the second loading station, may be present. The second intermediate conveyor may comprise a second supporting surface for supporting the product. The second supporting surface extends at a level below the tray 6 at the second discharging station when the carrier 5 of the second conveyor 4 is at the second discharging station. Of course, further extensions and combinations of different embodiments as described hereinbefore are possible within the scope of the present invention.

From the foregoing, it will be clear that the invention provides a conveying device which allows adding, removing or repositioning products which are conveyed by a series of carriers comprising a movable tray for carrying the products.

The invention is not limited to the embodiment shown in the drawings and described hereinbefore, which may be varied in different manners within the scope of the claims and their technical equivalents.

## Claims

1. A conveying device (1) which is provided with a first conveyor (2) and second conveyor (4), each comprising a series of carriers (5) which are drivable in a conveying direction, each carrier (5) including at least a tray (6) for receiving at least a product thereon, which tray (6) is movable between an open and closed position, wherein the first conveyor (2) is provided with a discharging station (7) and adapted such that the tray (6) in closed position can be opened at the discharging station (7) for discharging a product which is on the tray (6), and the second conveyor (4) is provided with a loading station (8) and adapted such that the tray (6) is in the closed position for receiving a product thereon at the loading station (8), wherein the conveying device (1) is further provided with a drivable intermediate conveyor (3) for conveying a product discharged at the discharging station (7) to the second conveyor (4) at the loading station (8), wherein the intermediate conveyor (3) comprises a supporting surface for supporting the product, wherein the conveying device (1) is adapted such that the supporting surface extends at a level below the tray (6) at the discharging station (7) when the corresponding carrier (5) of the first conveyor (2) is at the discharging station (7).

2. A conveying device (1) according to claim 1,
wherein the device is adapted such that the supporting surface extends at a level above the tray (6) of the carrier (5) of the second conveyor (4) at the loading station (8) when said carrier (5) is at the loading station (8).

3. A conveying device (1) according to claim 1 or 2, wherein the device (1) is adapted such that when the carrier (5) of the second conveyor (4) is at the loading station (8) its tray (6) is located higher than the level of the supporting surface of the intermediate conveyor (3) at the discharging station (7), and the supporting surface of the intermediate conveyor (3) comprises an inclined portion (9) between the discharging station (7) and loading station (8).

4. A conveying device (1) according to one of the preceding claims, wherein the intermediate conveyor (3) includes a loading portion (11) for adding, removing or re-arranging products on the supporting surface, which loading portion (11) extends substantially horizontally as seen in its conveying direction.

5. A conveying device (1) according to one of the preceding claims, wherein the conveying device (1) is adapted such that the first conveyor (2), the intermediate conveyor (3) and the second conveyor (4) have similar transport velocities.

6. A conveying device (1) according to one of the preceding claims, wherein the first conveyor (2) and second conveyor (4) are parts of a single endless main conveyor (10) including the discharging station (7) and the loading station (8), which main conveyor (10) is adapted such that the tray (6) of a carrier (5) in closed position can be opened at the discharging station (7) and closed before the loading station (8).

7. A conveying device (1) according to one of the preceding claims, wherein the tray (6) is tiltable with respect to the carrier (5).

8. A conveying device (1) according to one of the preceding claims, wherein the carrier (5) comprises at least two trays (6) moving in opposite directions when opened.

9. A conveying device (1) according to one of the preceding claims, wherein the carrier (5) comprises at least two trays (6) next to each other as seen perpendicular to the conveying direction, which trays (6) can be opened and closed independently.

10. A conveying device (1) according to one of the preceding claims, wherein the first conveyor (2) is adapted such that each tray (6) is opened at the discharging station (7).

11. A conveying device (1) according to one of the preceding claims, wherein at least at the discharging station (7) the first conveyor (2) and the intermediate conveyor (3) have similar conveying directions, and/or at least at the loading station (8) the second conveyor (4) and the intermediate conveyor (3) have similar conveying directions, has seen from above.

12. A conveying device (1) according to one of the preceding claims, wherein the width of the supporting surface of the intermediate conveyor (3) as seen perpendicular to its conveying direction is at least as wide as the width of the tray (6) or trays (6) as seen perpendicular to its conveying direction.

13. A conveying device (1) according to one of the preceding claims, wherein the intermediate conveyor (3) is curved within a plane extending parallel to the supporting surface.

14. A conveying device (1) according to one of the preceding claims, wherein the second conveyor (4) is provided with a second discharging station, which is adapted such that it functions similar to the discharging station (7) of the first conveyor (2), and wherein the device comprises a third conveyor including a second loading station, which is adapted such that it functions similar to the loading station (8) of the second conveyor (4), and wherein the device (1) comprises a second drivable intermediate conveyor for conveying a product discharged at the second discharging station to the third conveyor at the second loading station, wherein the second intermediate conveyor comprises a second supporting surface for supporting the product, wherein the conveying device (1) is adapted such that the second supporting surface extends at a level below the tray (6) at the second discharging station when the corresponding carrier (5) of the second conveyor (4) is at the second discharging station.

## Patentansprüche

1. Fördereinrichtung (1), die einen ersten Förderer (2) und einen zweiten Förderer (4) mit jeweils einer Reihe von Trägern (5) aufweist, die in eine Förderrichtung antreibbar sind, wobei jeder Träger (5) mindestens eine Ablage (6) zur Aufnahme mindestens eines Produkts aufweist, wobei die Ablage (6) zwischen einer offenen und geschlossenen Position bewegbar ist, wobei der erste Förderer (2) mit einer Abgabestation (7) versehen ist und derart konfiguriert ist, dass die Ablage (6) in einer geschlossenen Position an der Abgabestation (7) geöffnet werden kann, um ein auf der Ablage (6) angeordnetes Produkt abzugeben, und der zweite Förderer (4) mit einer Ladestation (8) versehen ist und derart konfiguriert ist, dass die Ablage (6) an der Ladestation (8) in der geschlossenen Position ist, um ein Produkt darauf abzulegen, wobei die Fördereinrichtung (1) außerdem mit einem antreibbaren Zwischenförderer (3) ausgestattet ist, um ein an der Abgabestation (7) abgegebenes Produkt zu dem zweiten Förderer (4) an der Ladestation (8) zu transportieren, wobei der Zwischenförderer (3) eine Tragfläche zum Tragen des Produkts aufweist, wobei die Fördereinrichtung (1) derart konfiguriert ist, dass sich die Tragfläche an der Abgabestation (7) auf einem tieferen Niveau erstreckt als die Ablage (6), wenn der entsprechende Träger (5) des ersten Förderers (2) an der Abgabestation (7) ist.

2. Fördereinrichtung (1) nach Anspruch 1, wobei die Einrichtung derart konfiguriert ist, dass an der Ladestation (8) die Tragfläche auf einem höheren Niveau angeordnet ist als die Ablage (6) des Trägers (5) des zweiten Förderers (4), wenn der Träger (5) an der Ladestation (8) ist.

3. Fördereinrichtung (1) nach Anspruch 1 oder 2, wobei die Einrichtung (1) derart konfiguriert ist, dass, wenn der Träger (5) des zweiten Förderers (4) an der Ladestation (8) ist, seine Ablage (6) auf einem höheren Niveau angeordnet ist als die Tragfläche des Zwischenförderers (3) an der Abgabestation (7) und dass zwischen der Abgabestation (7) und der Ladestation (8) die Tragfläche des Zwischenförderers (3) einen geneigten Abschnitt (9) aufweist.

4. Fördereinrichtung (1) nach einem der vorstehenden Ansprüche, wobei der Zwischenförderer (3) einen Ladeabschnitt (11) zum Hinzufügen, Entfernen oder Umordnen von Produkten auf der Tragfläche aufweist, wobei sich der Ladeabschnitt (11) im Wesentlichen horizontal erstreckt, gesehen in Förderrichtung.

5. Fördereinrichtung (1) nach einem der vorstehenden Ansprüche, wobei die Fördereinrichtung (1) derart konfiguriert ist, dass der erste Förderer (2), der Zwischenförderer (3) und der zweite Förderer (4) ähnliche Transportgeschwindigkeiten haben.

6. Fördereinrichtung (1) nach einem der vorstehenden Ansprüche, wobei der erste Förderer (2) und der zweite Förderer (4) Teile eines einzigen endlosen Hauptförderers (10) sind, der die Abgabestation (7) und die Ladestation (8) aufweist, wobei der Hauptförderer (10) derart konfiguriert ist, dass die Ablage (6) eines Trägers (5) in einer geschlossenen Position an der Abgabestation (7) geöffnet werden kann und vor der Ladestation (8) geschlossen werden kann.

7. Fördereinrichtung (1) nach einem der vorstehenden Ansprüche, wobei die Ablage (6) bezüglich des Trägers (5) kippbar ist.

8. Fördereinrichtung (1) nach einem der vorstehenden Ansprüche, wobei der Träger (5) mindestens zwei Ablagen (6) aufweist, die sich, wenn geöffnet, in entgegengesetzte Richtungen bewegen.

9. Fördereinrichtung (1) nach einem der vorstehenden Ansprüche, wobei der Träger (5) mindestens zwei Ablagen (6) nebeneinander aufweist, gesehen in eine Richtung senkrecht zur Förderrichtung, wobei die Ablagen (6) unabhängig voneinander geöffnet und geschlossen werden können.

10. Fördereinrichtung (1) nach einem der vorstehenden Ansprüche, wobei der erste Förderer (2) derart konfiguriert ist, dass an der Abgabestation (7) jede Ablage (6) geöffnet wird.

11. Fördereinrichtung (1) nach einem der vorstehenden Ansprüche, wobei - von oben aus gesehen - der erste Förderer (2) und der Zwischenförderer (3) zumindest an der Abgabestation (7) ähnliche Förderrichtungen haben und/oder der zweite Förderer (4) und der Zwischenförderer (3) zumindest an der Ladestation (8) ähnliche Förderrichtungen haben.

12. Fördereinrichtung (1) nach einem der vorstehenden Ansprüche, wobei die Breite der Tragfläche des Zwischenförderers (3) senkrecht zu seiner Förderrichtung mindestens so groß ist wie die Breite der Ablage(n) (6) senkrecht zu ihrer Förderrichtung.

13. Fördereinrichtung (1) nach einem der vorstehenden Ansprüche, wobei der Zwischenförderer (3) in einer Ebene, die sich parallel zur Tragfläche erstreckt, einen bogenförmigen Verlauf hat.

14. Fördereinrichtung (1) nach einem der vorstehenden Ansprüche, wobei der zweite Förderer (4) mit einer zweiten Abgabestation ausgestattet ist, die derart konfiguriert ist, dass sie ähnlich arbeitet wie die Abgabestation (7) des ersten Förderers (2), und wobei die Einrichtung einen dritten Förderer mit einer zweiten Ladestation aufweist, die derart konfiguriert ist, dass sie ähnlich arbeitet wie die Ladestation (8) des zweiten Förderers (4), und wobei die Einrichtung (1) einen zweiten antreibbaren Zwischenförderer aufweist, um ein an der zweiten Abgabestation abgegebenes Produkt zum dritten Förderer an der zweiten Ladestation zu transportieren, wobei der zweite Zwischenförderer eine zweite Tragfläche zum Tragen des Produkts aufweist, wobei die Fördereinrichtung (1) derart konfiguriert ist, dass sich die zweite Tragfläche an der zweiten Abgabestation auf einem tieferen Niveau erstreckt als die Ablage (6), wenn der entsprechende Träger (5) des zweiten Förderers (4) an der zweiten Abgabestation ist.

## Revendications

1. Dispositif de transport (1) qui est pourvu d'un premier transporteur (2) et d'un deuxième transporteur (4), chacun comprenant une série de chariots (5) qui sont entraînables dans une direction de transport, chaque chariot (5) comprenant au moins un plateau (6) pour recevoir au moins un produit sur celui-ci, lequel plateau (6) est mobile entre des positions ouverte et fermée, dans lequel le premier transporteur (2) est pourvu d'un poste de déchargement (7) et adapté de sorte que le plateau (6), dans la position fermée, puisse être ouvert au poste de déchargement (7) pour décharger un produit qui est sur le plateau (6), et le deuxième transporteur (4) est pourvu d'un poste de chargement (8) et adapté de sorte que le plateau (6) soit dans la position fermée pour recevoir un produit sur celui-ci au poste de chargement (8), dans lequel le dispositif de transport (1) est en outre pourvu d'un transporteur intermédiaire entraînable (3) pour transporter un produit déchargé au poste de déchargement (7) jusqu'au deuxième transporteur (4) au poste de chargement (8), dans lequel le transporteur intermédiaire (3) comprend une surface de support pour supporter le produit, dans lequel le dispositif de transport (1) est adapté de sorte que la surface de support s'étende à un niveau en dessous du plateau (5) au poste de déchargement (7) lorsque le chariot correspondant (5) du premier transporteur (2) est au poste de déchargement. (7).

2. Dispositif de transport (1) selon la revendication 1, dans lequel le dispositif est adapté de sorte que la surface de support s'étende à un niveau au-dessus du plateau (6) du chariot (5) du deuxième transporteur (4) au poste de chargement (8) lorsque ledit chariot (5) est au poste de chargement (8).

3. Dispositif de transport (1) selon la revendication 1 ou 2, dans lequel le dispositif (1) est adapté de sorte que, lorsque le chariot (5) du deuxième transporteur (4) est au poste de chargement (8), son plateau (6) soit positionné plus haut que le niveau de la surface de support du transporteur intermédiaire (3) au poste de déchargement (7), et la surface de support du transporteur intermédiaire (3) comprend une partie inclinée (9) entre le poste de déchargement (7) et le poste de chargement (8).

4. Dispositif de transport (1) selon une des revendications précédentes, dans lequel le transporteur intermédiaire (3) comprend une partie de chargement (11) pour ajouter, retirer ou réagencer des produits sur la surface de support, laquelle partie de chargement (11) s'étend de façon sensiblement horizontale, en vue dans sa direction de transport.

5. Dispositif de transport (1) selon une des revendications précédentes, dans lequel le dispositif de transport (1) est adapté de sorte que le premier transporteur (2), le transporteur intermédiaire (3) et le deuxième transporteur (4) possèdent des vitesses de transport similaires.

6. Dispositif de transport (1) selon une des revendications précédentes, dans lequel le premier transporteur et le deuxième transporteur (4) sont des parties d'un seul transporteur principal sans fin (10) comprenant le poste de déchargement (7) et le poste de chargement (8), lequel transporteur principal (10) est adapté de sorte que le plateau (6) d'un chariot (5) dans la position fermée puisse être ouvert au poste de déchargement (7) et fermé avant le poste de chargement (8).

7. Dispositif de transport (1) selon une des revendications précédentes, dans lequel le plateau (6) est inclinable par rapport au chariot (5).

8. Dispositif de transport (1) selon une des revendications précédentes, dans lequel le chariot (5) comprend au moins deux plateaux (6) se déplaçant dans des directions opposées lorsqu'ils sont ouverts.

9. Dispositif de transport (1) selon une des revendications précédentes, dans lequel le chariot (5) comprend au moins deux plateaux (6) l'un à côté de l'autre, en vue perpendiculaire à la direction de transport, lesquels plateaux (6) peuvent être ouverts et fermés indépendamment.

10. Dispositif de transport (1) selon une des revendications précédentes, dans lequel le premier transporteur (2) est adapté de sorte que chaque plateau (6) soit ouvert au poste de déchargement (7).

11. Dispositif de transport (1) selon une des revendications précédentes, dans lequel, au moins au poste de déchargement (7), le premier transporteur (2) et le transporteur intermédiaire (3) possèdent des directions de transport similaires, et/ou, au moins au poste de chargement (8), le deuxième transporteur (4) et le transporteur intermédiaire (3) possèdent des directions de transport similaires, en vue à partir du dessus.

12. Dispositif de transport (1) selon une des revendications précédentes, dans lequel la largeur de la surface de support du transporteur intermédiaire (3), en vue perpendiculaire à sa direction de transport, est au moins aussi large que la largeur du plateau (6) ou des plateaux (6), en vue perpendiculaire à leur direction de transport.

13. Dispositif de transport (1) selon une des revendications précédentes, dans lequel le transporteur intermédiaire (3) est incurvé à l'intérieur d'un plan s'étendant parallèlement à la surface de support.

14. Dispositif de transport (1) selon une des revendications précédentes, dans lequel le deuxième transporteur (4) est pourvu d'un second poste de déchargement, qui est adapté de sorte qu'il fonctionne de façon similaire au poste de déchargement (7) du premier transporteur (2), et dans lequel le dispositif comprend un troisième transporteur comprenant un second poste de chargement, qui est adapté de sorte qu'il fonctionne de façon similaire au poste de chargement (8) du deuxième transporteur (4), et dans lequel le dispositif (1) comprend un second transporteur intermédiaire entraînable pour transporter un produit déchargé au second poste de déchargement jusqu'au troisième transporteur au second poste de chargement, dans lequel le deuxième transporteur intermédiaire comprend une seconde surface de support pour supporter le produit, dans lequel le dispositif de transport (1) est adapté de sorte que la seconde surface de support s'étende à un niveau en dessous du plateau (6) au second poste de déchargement lorsque le chariot correspondant (5) du deuxième transporteur (4) est au second poste de déchargement.
